(19) Europäisches Patentamt
European Patent Office
Office européen des brevets

(11) Numéro de publication: **0 198 857**
**B1**

(12) **FASCICULE DE BREVET EUROPEEN**

(45) Date de publication du fascicule du brevet: **01.03.89**

(51) Int. Cl.⁴: **C 01 G 23/00,** C 01 G 25/00

(21) Numéro de dépôt: **85904983.5**

(22) Date de dépôt: **11.10.85**

(86) Numéro de dépôt international: **PCT/FR 85/00286**

(87) Numéro de publication internationale: **WO 86/02345 (24.04.86** Gazette **86/9)**

# (54) PROCEDE DE PREPARATION DE TITANATES ET ZIRCONATES.

(30) Priorité: **15.10.84 FR 8415748**

(43) Date de publication de la demande: **29.10.86 Bulletin 86/44**

(45) Mention de la délivrance du brevet: **01.03.89 Bulletin 89/9**

(84) Etats contractants désignés: **AT BE CH DE FR GB IT LI LU NL SE**

(56) Documents cités:
**DE-C- 965 695**
**US-A- 3 331 659**

**Chemical Abstracts, vol. 100, no. 16, April 1984, Columbus, Ohio, (US), p. 131, abstract 123495f**

(73) Titulaire: **CENTRE NATIONAL DE LA RECHERCHE SCIENTIFIQUE (CNRS), 15, Qual Anatole France, F-75007 Paris (FR)**

(72) Inventeur: **BERNIER, Jean-Claude, 11, rue de Lorraine, F-67380 Lingolsheim (FR)**
Inventeur: **POIX, Paul, Jean, Louis, 61, rue de Lorraine, F-67380 Lingolsheim (FR)**
Inventeur: **REHSPRINGER, Jean, Luc, 194 rue de Altors, Griesheim/Molsheim, F-67 210 OBERNAI (FR)**

(74) Mandataire: **Lemoine, Michel et al, Cabinet Michel Lemoine et Bernasconi 13 Boulevard des Batignolles, F-75008 Paris (FR)**

**EP 0 198 857 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a trait à un procédé de préparation de titanates et de zirconates respectivement de formules $MTiO_3$ et $MZrO_3$ dans lesquelles M désigne un métal divalent choisi dans le groupe constitué par le baryum, le strontium, le calcium, le plomb et le magnésium.

Il trouve une application particulièrement intéressante dans la préparation du titanate de baryum $BaTiO_3$.

On sait que le titanate de baryum $BaTiO_3$, grâce à ses propriétés ferro-électriques et à sa constante diélectrique élevée, est la matière de base des céramiques diélectriques, lesquelles trouvent une large application dans la réalisation des composants électroniques.

On conçoit tout l'intérêt de pouvoir disposer d'un procédé de préparation du $BaTiO_3$ qui soit facile à mettre en œuvre, permettant d'obtenir un produit de grande pureté et d'en régler la stoechiométrie, c'est-à-dire le rapport molaire $BaO/TiO_2$.

De nombreuses études ont été effectuées en vue de la mise au point de procédés de préparation de $BaTiO_3$ plus ou moins élaborés qui puissent répondre à ces objectifs.

K.S. MAZDIYASNI, R. T. DOLLOFF et J. S. SMITH décrivent dans «Journal of The American Ceramic Society» (Vol. 52, N° 10, p. 523 à 526 - 1969) un procédé de préparation du $BaTiO_3$ consistant à hydrolyser un mélange d'alcoxyde de baryum et d'alcoxyde de titane, procédé qui permet l'obtention d'un titanate stoechiométrique sous la forme d'une poudre très fine de grande pureté.

K. KISS, J. MAGDER, M.S. VUKASOVICH et R. LOCKHART dans «Journal of The American Ceramic Society» (Vol. 49, N° 6, p. 291 à 295 - 1966) recommandent, pour la préparation d'une poudre fine et de grande pureté de $BaTiO_3$, l'hydrolyse d'un alcoxyde de titane par une solution aqueuse ou hydroalcoolique de $Ba(OH)_2$.

Il faut également signaler l'existence du brevet américain n° 3 331 659 qui décrit plus particulièrement un procédé de préparation de titanate de plomb $PbTiO_3$. Selon le procédé décrit dans l'exemple de ce brevet, on fait réagir un alcoxyde de titane que l'on dissout dans du kérosène avec du formiate de plomb $Pb(-H-COO)_2$ en présence d'un agent de déalcoxylation tel que l'acide acétique. La réaction s'effectue en milieu hétérogène, c'est-à-dire que le formiate de plomb est en suspension dans le kérosène. Il se forme une poudre de $PbTiO_3$ qui est séparée par filtration, lavée avec du tétrachlorure de carbone afin d'éliminer le kérosène, séchée puis traitée à 200°C à la vapeur.

Ce procédé qui est limité à la préparation des titanate et zirconate de plomb est d'une mise en œuvre relativement longue avec un traitement final de la poudre à 200°C à la vapeur, fait appel à des réactifs dont la manipulation n'est pas très aisée tels que le formiate de plomb, utilise des solvants toxiques tels que le kérosène et le tétrachlorure de carbone. L'utilisation de ce dernier solvant peut ultérieurement entraîner l'introduction de chlore dans la maille cristalline du $PbTiO_3$ et provoquer une dilatation du réseau cristallin.

Le procédé conforme à l'invention, qui s'applique d'une façon générale à la préparation des titanates et zirconates $MTiO_3$ et $MZrO_3$, présente l'avantage sur ces procédés antérieurs d'être d'une plus grande simplicité d'exécution et de mettre en œuvre des réactifs ordinaires bon marché et non toxiques.

Le procédé conforme à l'invention est caractérisé en ce qu'il consiste successivement:

— à préparer un ester de formule

$$M[H-(CH_2)_nCO_2]_2$$

dans laquelle n = 1, 2, 3 ou 4 et M a la signification donnée ci-dessus, par attaque d'un sel du métal, tel que $BaCO_3$; $MgCO_3$; $Pb(OH)_2$, $2PbCO_3$; $SrCO_3$; $CaCO_3$, avec un acide organique de formule $H-(CH_2)_n-COOH$ dans laquelle n a la signification donnée ci-dessus, l'ester étant soluble dans son acide correspondant et dans le milieu dans lequel il est appelé à réagir,

— à faire réagir ledit ester en solution dans son acide avec un alcoxyde répondant à l'une des formules suivantes:

$$Ti[O(CH_2)_nCH_3]_4$$

$$Zr[O(CH_2)_nCH_3]_4$$

dans lesquelles n a la signification donnée ci-dessus, en présence d'un solvant organique apte à dissoudre ledit ester, la réaction conduisant à une solution claire,

— à porter à l'ébullition le mélange réactionnel jusqu'à élimination de l'excès de solvant et formation d'une substance présentant une forte viscosité à chaud,

— à solidifier ladite résine par refroidissement,

— à broyer ladite résine ou à la réduire en poudre par ajout d'azote liquide,

— et à traiter cette dernière pour obtenir le composé désiré.

Appliqué à la préparation du titanate de baryum $BaTiO_3$, le procédé conforme à l'invention comprend les étapes successives suivantes:

— dans une première étape, on prépare l'ester, par exemple par attaque d'un sel de baryum tel que $BaCO_3$, par un acide organique, tel que l'acide propionique selon le schéma réactionnel suivant:

$$2\ C_2H_5COOH + BaCO_3 \rightarrow (C_2H_5COO)_2Ba + CO_2 + H_2O$$

$CO_2$ et $H_2O$ s'éliminant par chauffage à 100°-120°C

— dans une seconde étape, on fait réagir l'alcoxyde de titane, tel que l'éthoxyde de titane $Ti(C_2H_5O)_4$ avec l'ester,

$$(C_2H_5COO)_2Ba + Ti\ (C_2H_5O)_4 \rightarrow \text{polycondensation mixte}$$

en présence d'un solvant organique, tel que l'isopropanol,

— dans une troisième étape, on porte à l'ébullition le mélange réactionnel et on évapore les solvants en excès jusqu'à formation d'une résine translucide de forte viscosité ($>300$ cp) que l'on solidifie par refroidissement et que l'on broie finement,

— dans une dernière étape, on traite la résine pour obtenir le titanate de baryum.

Le traitement de la résine peut s'effectuer selon deux méthodes.

Dans une première méthode, la résine est remise en solution, par exemple dans l'alcool méthylique $CH_3OH$, puis la solution est hydrolysée sous forme de gel, cette hydrolyse pouvant être accélérée par action des ultra-sons.

Dans une seconde méthode, on soumet la résine à une pyrolyse lente à l'air par montée lente de la température jusqu'à une température comprise entre 600°C et 800°C en quelques heures.

Selon une caractéristique complémentaire importante de l'invention, le titanate de baryum $BaTiO_3$ obtenu est soumis à un recuit à une température comprise entre 600°C et 700°C, ce qui permet d'obtenir du $BaTiO_3$ microcristallisé de diamètre moyen 0,5 µm.

Parmi les sels de baryum susceptibles de convenir à la préparation de l'ester, on peut citer le carbonate de baryum, l'oxyde de baryum ou l'hydroxyde de baryum. On utilise cependant, de préférence, le carbonate de baryum qui est la substance la plus stable et la mieux définie chimiquement. Les oxydes et hydroxydes ont, en effet, une forte propension à se carbonater, c'est-à-dire à se transfomer en carbonates, donc dans une composition en baryum mal définie.

Il faut, à ce propos, noter qu'il n'est pas nécessaire d'utiliser un carbonate de baryum de très grande pureté qui est un produit coûteux. Selon, en effet, une particularité intéressante du procédé, il est possible d'utiliser un carbonate de pureté moindre, c'est-à-dire un carbonate de baryum ordinaire qui contient généralement une faible proportion de carbonate de strontium et de calcium (1 à 3%). Lors de la préparation de l'ester par action de l'acide propionique par exemple, sur le carbonate de baryum, on attaque sélectivement le carbonate de baryum. Les carbonates de strontium et de calcium qui restent en suspension, sont alors éliminés par simple filtration. On réalise de cette manière une «auto-purification» du carbonate de baryum.

Parmi les acides convenant à la préparation de l'ester, on peut citer l'acide acétique, l'acide propionique, l'acide butyrique, l'acide valérique.

Les poudres de $BaTiO_3$ obtenues par le procédé conforme à l'invention présentent l'avantage de pouvoir fritter à plus basse température sans adjuvant de frittage. Le gain en température est de l'ordre de 200°C à 300°C par rapport au $BaTiO_3$ commercial qui fritte à 1300°C-1350°C. Indépendamment du gain en énergie important que représente cet abaissement de la température de frittage, cet abaissement est d'un grand intérêt, en particulier, lors de la réalisation de condensateurs multi-couches. Ces condensateurs sont constitués par un empilement de couches de céramiques diélectriques à base de $BaTiO_3$ alternant avec des couches métalliques constituant les électrodes qui sont co-frittées en même temps que les couches céramiques. Compte tenu de la température de frittage élevée (1300°C-1350°C), seuls peuvent convenir des métaux précieux tels que platine, palladium, argent ou or ainsi que leurs alliages.

L'abaissement de la température de frittage obtenu en utilisant les poudres de $BaTiO_3$ conformes à l'invention permet de remplacer ces métaux précieux par des métaux réfractaires tels que molybdène, tungstène ou encore par des alliages réfractaires tels que le nichrome (20-80) ou la kanthal, ce qui conduit à une réduction notable du prix de revient des condensateurs, les électrodes en métaux précieux pouvant représenter jusqu'à 70% de ce prix.

Le procédé conforme à l'invention présente, par ailleurs, l'avantage de permettre d'obtenir facilement du titanate de baryum à stoechiométrie variable, et par conséquent de préparer des poudres de $BaTiO_3$ dans lesquelles le rapport molaire $BaO/TiO_2$ sera avantageusement compris entre 0,8 et 1,2, limites entre lesquelles sont situées les meilleures conditions de densification.

Pour être transformées en une céramique diélectrique, les poudres de $BaTiO_3$ conformes à l'invention sont soumises, de façon classique, à une opération de compactage par compression et de frittage. Comme indiqué ci -dessus, ces poudres reçoivent une application privilégiée dans la réalisation des condensateurs multi-couches. Dans cette dernière application, il est possible de former des couches minces de résine par dissolution et évaporation de solvant, puis de soumettre lesdites couches à un traitement thermique donnant $BaTiO_3$ en couche. Il faut, à ce propos, remarquer que la taille fine présentée par les grains de $BaTiO_3$ obtenus par le procédé conforme à l'invention facilite l'obtention de couches minces, ce qui permet de réaliser des condensateurs multi-couches compacts.

Si le procédé conforme à l'invention a été décrit plus particulièrement à propos de la préparation du titanate de baryum, il s'applique de la même façon à la préparation des zirconates $MZrO_3$, exclusion faite de $MgZrO_3$ (n'existant pas).

La première étape du procédé qui consiste à préparer l'ester de formule

$$M[H\text{-}(CH_2)_nCO_2]_2$$

est commune à la préparation des titanates $MTiO_3$ et des zirconates $MZrO_3$.

Les esters de formule:

$$Ba[H\text{-}(CH_2)_nCO_2]_2$$

$$Mg[H\text{-}(CH_2)_nCO_2]_2$$

et $$Pb[H\text{-}(CH_2)_nCO_2]_2$$

sont obtenus par l'attaque de Ba $CO_3$; Mg $CO_3$; $Pb(OH)_2$, 2Pb $CO_3$ avec un acide organique de formule $H\text{-}(CH_2)_n\text{-}COOH$, sans qu'il soit besoin d'ajouter de l'eau.

Il est toutefois, recommandé lors de la préparation des esters

$Sr[H-(CH_2)_nCO_2]_2$

et $Ca[H-(CH_2)_nCO_2]_2$

compte tenu d'une vitesse de réaction plus lente, d'ajouter de l'eau à l'acide organique. Dans ce cas, l'eau en excès doit être éliminée, car elle provoquerait l'hydrolyse de l'alcoxyde de titane ou de zirconium. On y parvient en ajoutant progressivement de l'acide propionique par exemple, tout en faisant évaporer l'eau, jusqu'à élimination totale de cette dernière. On arrive ainsi à préparer une solution d'un sel de Sr ou de Ca, par exemple le propionate de strontium ou de calcium, dans son acide, l'acide propionique.

Il est également possible de partir directement des esters et de les dissoudre dans une faible quantité de leur acide correspondant: l'acétate de baryum dans l'acide acétique, le propionate de baryum dans l'acide propionique, l'acétate de magnésium dans l'acide acétique, le propionate de magnésium dans l'acide propionique etc.... Sur le plan du coût de revient, il est toutefois préférable de partir des carbonates qui sont moins coûteux que les esters. Lorsque le procédé est utilisé pour la préparation des zirconates $MZrO_3$, on prépare une résine dans les mêmes conditions que celles décrites pour le $BaTiO_3$ par réaction de l'ester avec un alcoxyde tel que l'isopropoxyde de zirconium que l'on traite comme indiqué précédemment.

On note, à ce propos, que le zirconium fait partie de la catégorie des cations entrant dans la composition d'une céramique diélectrique, car il permet d'abaisser la température ferro-électrique du $BaTiO_3$ et par là même de déplacer le maximum de la constante diélectrique du $BaTiO_3$.

Le procédé conforme à l'invention présente de nombreux avantages sur les procédés antérieurement connus:

— la réaction entre l'ester et l'alcoxyde s'effectue en milieu homogène, et conduit à une solution claire, l'ester étant soluble dans son acide correspondant et dans le solvant dans lequel est dissous l'alcoxyde de titane ou de zirconium,

— il permet de travailler en solution très concentrée (à titre d'illustration, et comme les exemples le montreront, à partir d'une solution de 30 cc, on peut obtenir 10 g de $BaTiO_3$; après élimination des solvants, le volume restant de résine est réduit à moins de 15 cc),

— il met en œuvre des réactifs bon marché, que l'on trouve facilement dans le commerce,

— il permet un mélange intime des deux métaux,

— il fait emploi de solvants ordinaires, non toxiques et pouvant être facilement récupérés par chauffage.

D'autres particularités et avantages de l'invention apparaîtront à la lecture des exemples de réalisation donnés, ci-après, à titre non limitatif.

*Exemple 1*

Préparation du $BaTiO_3$

1,97 g de $BaCO_3$ sec, mis dans un bécher de 250 cc, sont solubilisés à chaud dans 100 cc d'acide propionique (n = 2). A la solution ainsi obtenue, on ajoute 2,27 g d'éthoxyde de titane (n = 2) préalablement dilué dans 50 cc d'isopropanol. On obtient une solution limpide. Cette solution est évaporée jusqu'à l'obtention d'une phase visqueuse d'un volume d'environ 10 cc se solidifiant au refroidissement. La phase solide est légèrement jaunâtre et transparente.

Le produit est récupéré soit par fractionnement à l'azote liquide, soit par raclage, puis pyrolysé entre 600°C et 800°C pendant un laps de temps compris entre 5 minutes et 120 minutes (selon le degré de cristallinité désiré). Le produit final est du $BaTiO_3$ exempt d'impuretés. On obtient une quantité de $BaTiO_3$ de 2,333 g.

*Exemple 2a, 2b*

Préparation de $SrTiO_3$ et de $SrZrO_3$.

Dans un bécher de 250 cc. on introduit 3,254 g de $SrCO_3$ et on y ajoute une solution diluée d'acide propionique (ou d'acide acétique, butyrique). Le volume de la solution ajoutée est de 10 cc d'eau et de 2 cc d'acide propionique. On élève la température du mélange. La réaction débute par un faible dégagement de $CO_2$ devenant de plus en plus important. On obtient une solution claire (pas de précipité).

On élimine l'eau qui est en excès et qui provoquerait l'hydrolyse de l'alcoxyde de titane (ou de zirconium). A cet effet, on ajoute progressivement de l'acide propionique (ou acétique, butyrique) en maintenant la solution à l'ébullition. La température d'ébullition passe progressivement de 100°C à 140°C; c'est-à-dire que les vapeurs émanant du liquide en ébullition s'enrichissent en acide propionique (acétique, butyrique) jusqu'à l'élimination totale de l'eau. Les vapeurs ont alors la température de 141°C (température d'ébullition de l'acide propionique). On a ajouté environ 40 cc d'acide. En fin d'élimination de l'eau, le volume résiduel contenant le propionate de Sr et l'acide propionique est de 20 cc (ce volume pourrait être encore réduit).

On ajoute à cette solution de propionate (ou d'acétate ou de butyrate) de strontium, une solution contenant 7,220 g d'isopropanolate de zirconium ou 5,023 g d'éthanolate de titane dissous dans 10 cc d'éthanol (ou d'isopropanol). La solution ainsi mélangée est portée à l'ébullition jusqu'à l'obtention, après élimination des solvants, d'une résine ou substance à forte viscosité (400 à 600 cp) à des températures comprises entre 100°C et 140°C. Le volume résiduel de la résine est inférieur à 15 cc pour un volume de départ d'environ 30 à 40 cc. En se refroidissant, la résine se solidifie. Elle est récupérée par fractionnement à l'azote liquide. La poudre décomposée entre 600°C et 800°C conduit à $SrTiO_3$ ($SrZrO_3$) de grande pureté, de surface spécifique comprise entre 10 et 20 $m^2/g$ et de granulométrie comprise entre 0,1 et 0,5 µm.

La quantité de poudre de $SrZrO_3$ préparée par ce procédé est de 5 g.

La quantité de poudre de $SrTiO_3$ préparée par ce procédé est de 4,045 g.

*Exemple 3a, 3b*

Préparation de $CaZrO_3$ et $CaTiO_3$

Le procédé est identique à celui décrit dans l'exemple précédent pour la préparation de $SrTiO_3$, $SrZrO_3$.

On utilise les quantités de réactifs suivantes:

| | |
|---|---|
| $CaCO_3$: | 2,792 g |
| Isopropoxyde de zirconium: | 9,136 g |
| Ethoxyde de titane: | 6,356 g |

La quantité de poudre de $CaZrO_3$ obtenue est de 5 g.

La quantité de poudre de $CaTiO_3$ obtenue est de 3,793 g.

Les poudres obtenues ont la même granulométrie et la même surface spécifique que les poudres préparées dans l'exemple précédent.

*Exemple 4*

Préparation de $MgTiO_3$

3,510 g de $MgCO_3$ sont mis dans un bécher de 250 cc et on y ajoute 20 cc d'acide propionique (ou d'acide acétique, butyrique) ainsi que 2 gouttes d'eau. Le mélange est porté à l'ébullition. La solution devient claire après la réaction (élimination de $CO_2$).

A cette solution, on ajoute 9,481 g d'éthoxyde de titane dans 10 cc d'éthanol (ou isopropanol). On obtient une solution claire. Celle-ci est portée à ébullition (140°C) jusqu'à obtention, après élimination des solvants, d'une substance à forte viscosité à 140°C (400-600 cp). Le volume résiduel de la résine est de l'ordre de 15 cc pour un volume de départ de 40 cc. Au refroidissement, la résine se solidifie. Après calcination à 650°C, on obtient une poudre de $MgTiO_3$ ayant les mêmes caractéristiques que celles de la poudre de $SrTiO_3$ obtenue dans l'exemple 2a.

La quantité de poudre de $MgTiO_3$ obtenue est de 5 g.

*Exemple 5*

Préparation de $BaZrO_3$

Le procédé est identique à celui décrit dans l'exemple 4 pour la préparation de $MgTiO_3$, mais sans ajout d'eau lors de la préparation du propionate de baryum.

On utilise les quantités de réactifs suivantes:

| | |
|---|---|
| carbonate de baryum: | 3,568 g |
| isopropoxyde de zirconium: | 5,923 g |

On obtient 5 g de zirconate de baryum.

*Exemple 6*

Préparation de $PbTiO_3$ et de $PbZrO_3$

On part ici de l'hydroxycarbonate de plomb $Pb(OH)_2$, $2PbCO_3$.

Le procédé est identique à celui décrit pour la préparation de $BaZrO_3$.

On utilise pour la préparation du $PbZrO_3$ les quantités de réactifs suivantes:

| | |
|---|---|
| $Pb(OH)_2$, $2PbCO_3$: | 11,191 g |
| isopropoxyde de zirconium: | 4,727 g |

Après calcination du produit final à 650°C, on obtient 5 g de $PbZrO_3$.

On utilise pour la préparation du $PbTiO_3$ les quantités de réactifs suivantes:

| | |
|---|---|
| $Pb(OH)_2$, $2PbCO_3$: | 12,797 g |
| Ethoxyde de titane: | 3,760 g |

Après calcination du produit final à 650°C, on obtient 5 g de $PbTiO_3$.

**Revendications**

1. Procédé de préparation de titanates et zirconates respectivement de formules $MTiO_3$ et $MZrO_3$ dans lesquelles M désigne un métal divalent choisi dans le groupe constitué par le baryum, le strontium, le calcium, le plomb et le magnésium à l'exclusion du $MgZrO_3$, caractérisé en ce qu'il consiste successivement:

— à préparer un ester de formule

$$M[H\text{-}(CH_2)_nCO_2]_2$$

dans laquelle n = 1, 2, 3 ou 4 et M a la signification donnée ci-dessus, par attaque d'un sel du métal, tel que $BaCO_3$; $MgCO_3$; $Pb(OH)_2$, $2PbCO_3$; $SrCO_3$; $CaCO_3$, avec un acide organique de formule $H\text{-}(CH_2)_n\text{-}COOH$ dans laquelle n a la signification donnée ci-dessus, l'ester étant soluble dans son acide correspondant,

— à faire réagir ledit ester en solution dans son acide avec un alcoxyde répondant à l'une des formules suivantes:

$$Ti[O(CH_2)_nCH_3]_4$$

$$Zr[O(CH_2)_nCH_3]_4$$

dans lesquelles n a la signification donnée ci-dessus, en présence d'un solvant organique apte à dissoudre ledit ester, la réaction conduisant à une solution claire.

— à porter à ébullition le mélange réactionnel jusqu'à élimination de l'excès de solvants et formation d'une résine translucide présentant une forte viscosité à chaud,

— à solidifier par refroidissement ladite résine,

— à broyer ladite résine ou à la réduire en poudre par ajout d'azote liquide,

— et à traiter cette dernière pour obtenir le composé désiré.

2. Procédé selon la revendication 1, caractérisé en ce que, lorsqu'il est appliqué à la préparation de titanate de baryum, l'on utilise pour l'attaque du sel de baryum tel que $BaCO_3$, l'acide propionique et en ce que l'on fair réagir l'ester en solution dans l'acide propionique avec l'alcoxyde, en présence d'un solvant organique tel que l'isopropanol.

3. Procédé selon la revendication 2, caractérisé en ce que la résine est remise en solution, puis la solution est hydrolysée sous forme de gel.

4. Procédé selon la revendication 2, caractérisé en ce que la résine est soumise à une pyrolyse lente à l'air par montée lente de la température jusqu'à

une valeur comprise entre 600°C et 800°C en quelques heures.

5. Procédé selon la revendication 2, caractérisé en ce que le titanate de baryum $BaTiO_3$, après traitement de la résine, est soumis à un recuit à une température comprise entre 600°C et 700°C.

6. Procédé selon l'une quelconque des revendications 1 et 2, caractérisé en ce que l'alcoxyde de titane ou de zirconium est dissous dans l'éthanol ou l'isopropanol.

7. Procédé selon l'une quelconque des revendications 1 et 2, caractérisé en ce que l'alcoxyde de titane est l'éthoxyde de titane.

8. Procédé selon l'une quelconque des revendications 1 et 2, caractérisé en ce que l'alcoxyde de titane est l'isopropoxyde de titane.

9. Procédé selon la revendication 2, caractérisé en ce que l'alcoxyde de titane est le butoxyde de titane.

10. Procédé selon l'une quelconque des revendications 1 et 2, caractérisé en ce que l'alcoxyde de zirconium est l'isopropoxyde de zirconium.

11. Procédé selon la revendication 1, caractérisé en ce que l'ester de formule

$$M[H\text{-}(CH_2)_nCO_2]_2$$

dans laquelle M désigne le strontium ou le calcium est préparé par l'attaque de $SrCO_3$ ou $CaCO_3$ avec un acide organique de formule $H\text{-}(CH_2)_n\text{-}COOH$ avec ajout d'eau, l'eau en excès étant ensuite éliminée, en ajoutant progressivement le même acide organique que celui utilisé pour la préparation de l'ester, tout en faisant évaporer l'eau jusqu'à élimination totale de cette dernière.

**Patentansprüche**

1. Verfahren zur Herstellung von Titanaten und Zirkonaten mit den Formeln $MTiO_3$ bzw. $MZrO_3$, in welchen M ein zweiwertiges Metall bedeutet, ausgewählt aus einer Gruppe, die gebildet wird aus Barium, Strontium, Calcium, Blei und Magnesium mit Ausnahme von $MgZrO_3$, gekennzeichnet durch die folgenden Verfahrensschritte:

— Herstellung eines Esters der Formel

$$M[H\text{-}(CH_2)_nCO_2]_2$$

in welcher n = 1, 2, 3 oder 4 bedeutet und M die obige Bedeutung hat, durch Einwirkung eines Metallsalzes, wie $BaCO_3$; $MgCO_3$; $Pb(OH)_2$, $2PbCO_3$; $SrCO_3$; $CaCO_3$, auf eine organische Säure der Formel $H\text{-}(CH_2)_n\text{-}COOH$, in welcher n die oben angegebene Bedeutung hat, wobei der Ester in seiner korrespondierenden Säure löslich ist,

— Reaktion dieses Esters, gelöst in seiner Säure, mit einem Alkoxyd entsprechend einer der folgenden Formeln:

$$Ti[O(CH_2)_nCH_3]_4$$

$$Zr[O(CH_2)_nCH_3]_4$$

in welcher n die obige Bedeutung hat, in Gegenwart eines organischen Lösungsmittels, in welchem der genannte Ester löslich ist, wobei die Reaktion zu einer klaren Lösung führt,

— Kochen der Reaktionsmischung bis zur Elimination des Lösungsmittelüberschusses und Bildung eines durchsichtigen Harzes mit starker Viskosität in der Wärme,

— Verfestigen des erhaltenen Harzes durch Abkühlung,

— Zerreiben oder Pulverisieren des erhaltenen Harzes unter Zusatz von flüssigem Stickstoff,

— und Behandeln des so erhaltenen Verfahrensproduktes, um die gewünschte Zusammensetzung zu erhalten.

2. Verfahren nach Anspruch 1, dadurch gekennzeichnet, daß man im Falle der Herstellung von Bariumtitanat zur Umsetzung des Bariumsalzes wie Bariumcarbonat Propionsäure verwendet und daß man den Ester in propionsäurer Lösung mit dem Alkoxyd reagieren läßt, und zwar in Gegenwart eines organischen Lösungsmittels, wie Isopropanol.

3. Verfahren nach Anspruch 2, dadurch gekennzeichnet, daß das Harz wieder in Lösung gebracht wird, worauf die Lösung in Form eines Gels hydrolysiert wird.

4. Verfahren nach Anspruch 2, dadurch gekennzeichnet, daß das Harz einer langsamen Pyrolyse an der Luft unterworfen wird, unter langsamen Ansteigen der Temperatur bis zu einem Wert zwischen 600°C und 800°C innerhalb mehrerer Stunden.

5. Verfahren nach Anspruch 2, dadurch gekennzeichnet, daß das Bariumtitanat $BaTiO_3$ nach Behandlung des Harzes einem Glühen bei einer Temperatur zwischen 600°C und 700°C unterworfen wird.

6. Verfahren nach Anspruch 1 oder 2, dadurch gekennzeichnet, daß das Alkoxyd des Titans oder des Zirkoniums in Ethanol oder Isopropanol gelöst ist.

7. Verfahren nach Anspruch 1 oder 2, dadurch gekennzeichnet; daß das Alkoxyd des Titans das Ethoxyd des Titans ist.

8. Verfahren nach Anspruch 1 oder 2, dadurch gekennzeichnet, daß das Alkoxyd des Titans das Isopropoxyd des Titans ist.

9. Verfahren nach Anspruch 2, dadurch gekennzeichnet, daß das Alkoxyd des Titans das Butoxyd des Titans ist.

10. Verfahren nach Anspruch 1 oder 2, dadurch gekennzeichnet, daß das Alkoxyd des Zirkoniums das Isopropoxyd des Zirkoniums ist.

11. Verfahren nach Anspruch 1, dadurch gekennzeichnet, daß der Ester der Formel

$$M[H\text{-}(CH_2)_nCO_2]_2$$

in welcher M Strontium oder Calcium bedeutet, durch Umsetzung von $SrCO_3$ oder $CaCO_3$ mit einer organischen Säure der Formel $H\text{-}(CH_2)_n\text{-}COOH$ unter Zusatz von Wasser hergestellt wird, der Überschuß an Wasser dann beseitigt wird unter sukzessiver Zugabe der gleichen organischen Säure, die bei der Herstellung des Esters verwendet wurde, wobei das Wasser bis zu seiner völligen Eliminierung verdampft wird.

**Claims**

1. Process for preparing titanates and zirconates, respectively, of formulas $MTiO_3$ and $MZrO_3$, in which M designates a bivalent metal chosen from the group constituted by barium, strontium, calcium, lead and magnesium, $MgZrO_3$ being excluded, characterised in that it consists, in succession, in:

— preparing an ester of formula

$$M[H\text{-}(CH_2)_nCO_2]_2$$

in which n = 1, 2, 3 or 4 and M has the significance given above, by attack of a salt of the metal, such as $BaCO_3$; $MgCO_3$; $Pb(OH)_2$, $2PbCO_3$; $SrCO_3$; $CaCO_3$, with an organic acid of formula $H\text{-}(CH_2)_n\text{-}COOH$, in which n has the significance given above, the ester being soluble in its corresponding acid,

— reacting the said ester in solution in its acid with an alkoxide corresponding to one of the following formulas:

$$Ti[O(CH_2)_nCH_3]_4$$

$$Zr[O(CH_2)_nCH_3]_4$$

in which n has the significance given above, in the presence of an organic solvent suitable for dissolving the said ester, the reaction resulting in a clear solution,

— bringing the reaction mixture to boiling until the excess of solvents is eliminated and a translucent resin having high viscosity in the hot state is formed,

— solidifiyng the said resin by cooling,

— crushing the said resin or reducing it to powder by addition of liquid nitrogen,

— and treating this last-mentioned to obtain the desired compound.

2. Process according to claim 1, characterised in that, when it is applied to the preparation of barium titanate, propionic acid is used for attack of the barium salt such as $BaCO_3$, and the ester is reacted in solution in the propionic acid with the alkoxide in the presence of an organic solvent such as isopropanol.

3. Process according to claim 2, characterised in that the resin is put back into solution and the solution is then hydrolysed in the form of a gel.

4. Process according to claim 2, characterised in that the resin is subjected to slow pyrolysis in air by a slow increase in temperature to a value comprised between 600°C and 800°C in a few hours.

5. Process according to claim 2, characterised in that, after treatment of the resin, the barium titanate $BaTiO_3$ is subjected to reheating at a temperature comprised between 600°C and 700°C.

6. Process according to either of claims 1 and 2, characterised in that the titanium or zirconium alkoxide is dissolved in ethanol or isopropanol.

7. Process according to either of claims 1 and 2, characterised in that the titanium alkoxide is titanium ethoxide.

8. Process according to either of claims 1 and 2, characterised in that the titanium alkoxide is titanium isopropoxide.

9. Process according to claim 2, characterised in that the titanium alkoxide is titanium butoxide.

10. Process according to either of claims 1 and 2, characterised in that the zirconium alkoxide is zirconium isopropoxide.

11. Process according to claim 1, characterised in that the ester of formula

$$M[H\text{-}(CH_2)_nCO_2]_2$$

in which M designates strontium or calcium is prepared by attack of $SrCO_3$ or $CaCO_3$ with an organic acid of formula $H\text{-}(CH_2)_n\text{-}COOH$ with addition of water, the excess water being then eliminated by gradually adding the same organic acid as that used for the preparation of the ester, while causing the water to evaporate until complete elimination thereof.